**Europäisches Patentamt**

**European Patent Office**

**Office européen des brevets**

(19)

(11) Numéro de publication: **0 162 991**

**A1**

# (12) DEMANDE DE BREVET EUROPEEN

(21) Numéro de dépôt: **84430017.8**

(22) Date de dépôt: **25.05.84**

(51) Int. Cl.⁴: **A 61 C 9/00**

(43) Date de publication de la demande:
**04.12.85 Bulletin 85/49**

(84) Etats contractants désignés:
**DE GB IT**

(71) Demandeur: **Fejan, Robert**
**3, rue Raymond Marc**
**F-30000 Nimes(FR)**

(72) Inventeur: **Fejan, Robert**
**3, rue Raymond Marc**
**F-30000 Nimes(FR)**

(74) Mandataire: **Moretti, René et al,**
**C/O Cabinet BEAU DE LOMENIE 14, rue Raphael**
**F-13008 Marseille(FR)**

(54) **Perfectionnements aux dispositifs pour la prise d'occlusion chez l'édenté total haut et bas.**

(57) Le dispositif comportant une plaque-base (1) placée sur la machoire supérieure et une plaque-base (2) placée sur la machoire inférieure, est caractérisé en ce qu'il comporte, en outre, une monture (3) ancrée dans la plaque-base supérieure (1) et comportant une tige support $(3_3)$ réglable en hauteur et comportant des moyens $(3_{4b})$ pour son blocage en position, à laquelle tige est articulée omnidirectionnellement et à son extrémité libre une plaque de contact $(3_1)$ d'un contour analogue à la crête desdites plaques-bases (1, 2), laquelle plaque $(3_1)$ est destinée à venir en appui sur la crête de la plaque-base inférieure (2) lorsque le patient ferme la bouche et comporte des moyens $(3_{2f})$ pour l'immobiliser en position.

Il trouve son application dans l'éxécution des prothéses dentaires.

FIG 3.

Croydon Printing Company Ltd

Perfectionnements aux dispositifs pour la prise d'occlusion
chez l'édenté haut et bas.

La présente invention a pour objet des perfectionnements
aux dispositifs pour la prise d'occlusion chez l'édenté total haut et
bas.

Le secteur technique de l'invention est celui de la dentisterie et se rapporte plus particulièrement aux appareillages utilisés
dans le cadre de la réalisation de prothèses dentaires.

Par le passé, la prise d'occlusion chez l'édenté total haut
et bas, se faisait par tâtonnement au moyen de plaques-base supérieure et inférieure sur lesquelles on rapportait des bourrelets de cire
dans le but de déterminer le plan d'occlusion et l'espace intermaxillaire.

Cette méthode étant incertaine, il a été conçu des appareils
pour la prise de l'occlusion dont l'objectif était de pallier les
inconvénients de la méthode traditionnelle.

Un appareil connu se compose de plusieurs plaques dont
une est fixée à la plaque-base portée par la mâchoire inférieure du
patient et l'autre, est articulée autour d'un pivot rotule de telle sorte
que lors de la prise d'occlusion, cette plaque venant au contact de
la plaque-base supérieure, le praticien puisse déterminer le plan d'occlusion, l'espace gingival et les autres paramètres nécessaires à la
confection de la prothèse.

Un inconvénient d'un tel appareillage est que le dispositif
étant porté par le maxillaire inférieur qui est la partie mobile de la
mâchoire, la mesure prise au moment où la plaque du haut vient en appui sur la plaque-base supérieure peut être faussée, du fait de la
mauvaise position prise par le maxillaire inférieur au moment de
l'occlusion et due au mouvement relatif, aussi minime soit-il, de la
plaque articulée par rapport à la plaque base supérieure. A ce moment,
la mâchoire inférieure peut prendre une position forcée et la mesure
prise par le praticien est alors faussée.

Un autre inconvénient dudit appareillage connu est l'impossibilité de l'utiliser avec une plaque-base supérieure à bourrelet,
qui est l'élément indispensable pour déterminer les paramètres cliniques et leur matérialisation en vue de la mise en oeuvre de la prothèse.

La présente invention vise à remédier à ces inconvénients.

L'objectif à atteindre est un dispositif pour la prise d'occlusion et la détermination de tous les paramètres tels que le plan de Camper, la ligne bipupillaire, le profil de la lèvre etc... ainsi que la matérialisation de tous ces éléments pour permettre au technicien la bonne exécution de la future prothèse.

Cet objectif est atteint par le dispositif pour la prise d'occlusion chez l'édenté total haut et bas selon l'invention comportant une plaque-base placée sur la mâchoire supérieure et une plaque-base placée sur la mâchoire inférieure, caractérisé en ce qu'il comporte, en outre, une monture ancrée dans la plaque-base supérieure et comportant une tige support réglable en hauteur et comportant des moyens pour la bloquer en position, à laquelle tige est articulée omnidirectionnellement et à son extrémité libre, une plaque de contact d'un contour analogue à la crête desdites plaques-base, laquelle plaque de contact est destinée à venir en appui sur la crête de la plaque-base inférieure lorsque le patient ferme la bouche et comporte des moyens pour l'immobiliser en position.

La plaque-base supérieure comporte un bourrelet s'étendant devant la paroi interne buccale et sur lequel bourrelet la lèvre vient en appui. Ladite monture se compose d'une embase à laquelle est fixée la tige support de la plaque articulée, laquelle embase comporte des moyens d'ancrage à la plaque-base supérieure et des moyens de blocage de ladite tige.

Dans un mode de réalisation, l'embase de la monture adopte la forme d'une douille cylindrique dans laquelle est montée à coulissement ladite tige support, laquelle tige est immobilisée en position au moyen d'une vis de pression vissée dans la paroi de la douille. Celle-ci comporte, à la périphérie de sa partie destinée à pénétrer dans l'épaisseur de la plaque-base supérieure, des aspérités pour favoriser son ancrage dans cette dernière.

La vis de pression qui équipe la douille s'étend du côté du bourrelet de la plaque-base supérieure, laquelle comporte, dans le prolongement de l'axe longitudinal de la vis, une échancrure pour permettre l'accès de la vis au moyen d'une clé adaptée pour la manoeuvrer.

Ladite tige support comporte, à son extrémité à laquelle est articulée la plaque de contact une protubérance sphérique engagée dans un logement sphérique réservé dans un socle solidaire de la plaque de contact, l'ensemble formant une rotule.

3   0162991

Le logement sphérique se compose de deux parties pouvant être éloignées ou rapprochées l'une de l'autre pour libérer la rotule ou réaliser son blocage au moyen d'une vis de serrage dont la tête est orientée du côté du bord externe de la plaque de contact. Celle-ci adopte la forme générale d'un fer à cheval et comporte, sur son bord extérieur des échancrures qui constituent des repères nécessaires à la réalisation de la future prothèse.

Le résultat de l'invention est la détermination du plan d'occlusion et de la hauteur de l'espace maxillaire et également de la détermination de tous les paramètres nécessaires à la réalisation des prothèses dentaires.

La présente invention présente l'avantage de donner au praticien les moyens de procéder, au cours d'une seule opération, à la détermination de tous les paramètres nécessaires à l'exécution d'une prothèse dentaire pour l'édenté total haut et bas.

L'invention permet, du fait que l'appareil est fixé à la plaque-base supérieure, de conserver tous les avantages de la base en résine avec son bourrelet de cire, ledit bourrelet étant l'élément indispensable pour déterminer lesdits paramètres. La monture selon l'invention donne la possibilité de pouvoir déterminer la bonne hauteur d'occlusion qui est spécifique pour chaque cas et ce, grâce à la tige pivot montée coulissante dans l'embase qui est fixée à la plaque-base supérieure sans toutefois contraindre le maxillaire inférieur à prendre une position forcée du fait du montage sur rotule de la plaque articulée. Cette plaque mobile est fixée définitivement dans sa position correcte au moyen de la vis de serrage qui bloque la rotule dans le socle lorsque le maxillaire du bas vient sans contrainte et librement au contact de ladite plaque articulée.

Selon l'invention, la monture étant solidaire de la plaque-base du haut, qui constitue le plan fixe, permet au maxillaire du bas de venir trouver sa bonne position quel que soit le chemin condylien parcouru et cela sans jamais rencontrer de forces opposables.

Les risques d'erreur sont ainsi absolument nuls.

D'autres avantages et les caractéristiques de l'invention ressortiront encore à la lecture de la description suivante d'un mode de réalisation du dispositif énoncé ci-avant en référence au dessin annexé sur lequel :

- la figure 1 est une vue en perspective éclatée d'une monture entrant dans la composition du dispositif selon l'invention;

- la figure 2 est une vue en coupe schématique de la mâchoire d'un patient équipée du dispositif selon l'invention. La bouche est représentée ouverte avant la prise d'occlusion;

- la figure 3 est une vue en coupe schématique de la mâchoire du patient illustrée à la figure 2, la bouche est représentée fermée après la prise d'occlusion.

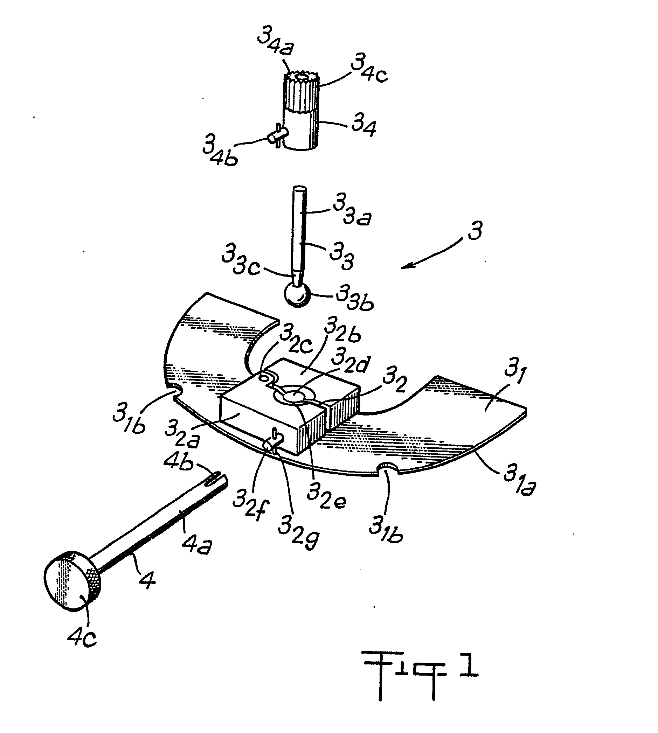

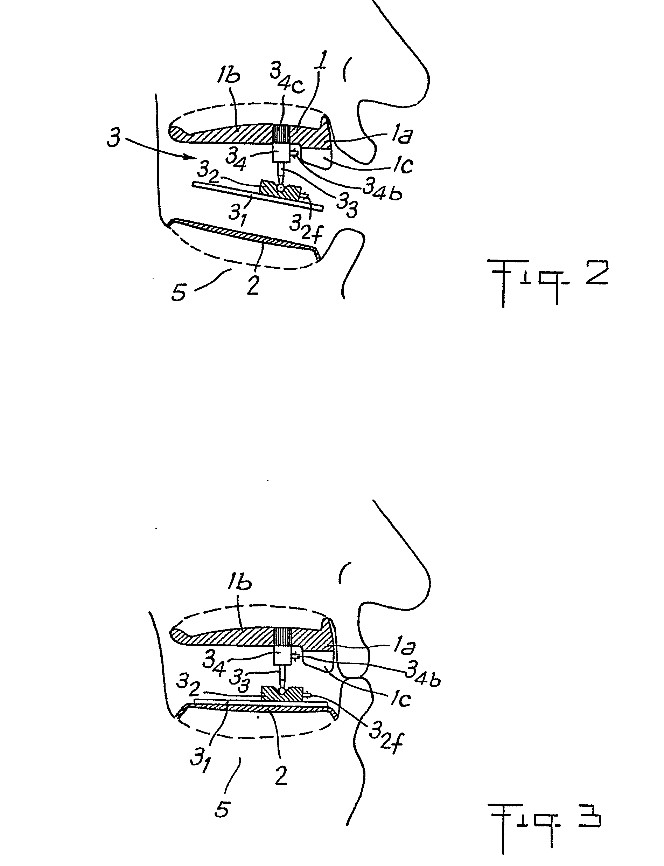

Tel que cela est représenté à la figure 2 du dessin, le dispositif selon l'invention se compose d'une plaque-base supérieure 1, d'une plaque base inférieure 2 et d'une monture 3 à plaque articulée.

De façon connue, les plaques-base 1 et 2 sont réalisées par moulage, après une prise d'empreinte des gencives haute et basse du patient. Les plaques-base sont réalisées en matière plastique, par exemple en résine ou en fibres thermoformable.

La plaque-base supérieure se place sur la gencive haute et comporte, au droit de la crête venant du moulage un bourrelet $1a$ s'étendant le long de son bord périphérique, lequel se place devant la paroi interne buccale et donc devant la paroi interne de la lèvre supérieure, celle-ci venant en appui sur le bourrelet $1a$.

La paroi centrale $1b$ de ladite plaque-base, qui recouvre la voûte du palais est d'une relative forte épaisseur en son centre juste derrière le bourrelet de cire pour permettre l'ancrage de la monture 3 dont il sera question plus loin.

La plaque-base inférieure 2 est réalisée à partir d'une feuille de matière plastique mince qui recouvre la gencive du bas. De façon connue, la crête est dressée jusqu'à la transparence pour favoriser le contact de la plaque pivotante de la monture 3 et de la plaque-base 2, la surface de cette base devant être la plus plate possible.

La monture 3 est par exemple réalisée en laiton chromé ou en acier inoxydable et se compose d'une plaque de contact $3_1$ qui adopte la forme générale d'un fer à cheval, laquelle plaque est d'un contour externe sensiblement elliptique, en accord avec les reliefs gingivaux. Ladite plaque $3_1$ est obtenue à partir d'une plaque plane de faible épaisseur, par exemple de 15/10 de millimètre et est toutefois d'une bonne rigidité. Son bord externe $3_{1a}$ comporte des échancrures $3_{1b}$ par exemple demi circulaires qui constituent des repères indispensables pour l'exécution de la prothèse. Selon le mode de réalisation représenté à la figure 1, la plaque de contact $3_1$ comporte

deux repères $3_{1b}$ symétriques par rapport à l'axe de symétrie de la plaque. Celle-ci comporte, dans sa partie centrale, un évidement délimité par un bord $3_{1c}$ sensiblement parallèle au bord externe $3_{1a}$.

Ladite plaque comporte en outre, un socle $3_2$ se présentant sous la forme générale d'un petit bloc parallélépipédique. Ce socle $3_2$ est réalisé en deux parties $3_{2a}$, $3_{2b}$. Dans un mode d'exécution, la partie $3_{2b}$ est articulée à la partie $3_{2a}$ autour d'un axe $3_{2c}$ perpendiculaire à la plaque $3_1$. La partie $3_{2a}$ est solidarisée par tous moyens connus tels que soudage, rivetage ou autres, à la plaque $3_1$ et constitue donc la partie fixe du socle $3_2$. Celui-ci comporte dans sa partie centrale un logement sphérique $3_{2d}$ réalisé au droit du plan de jonction des parties $3_{2a}$, $3_{2b}$, chacune desdites parties comportant ainsi un logement demi sphérique, de même rayon. Ledit logement est percé, à sa partie supérieure suivant un orifice circulaire dont le rebord $3_{2e}$ peut être usiné en chanfrein. La partie fixe $3_{2a}$ comporte une vis de serrage $3_{2f}$ passée dans un trou cylindrique pratiqué sur le côté du logement sphérique opposé à l'axe d'articulation $3_{2c}$, lequel trou s'étend du côté de la partie mobile $3_{2b}$ pour déboucher dans le plan de jonction desdites parties devant un trou taraudé réservé dans ladite partie mobile. La tête de la vis $3_{2f}$ forme un épaulement qui vient au contact de la face avant du socle $3_2$ et sa partie filetée coopère avec le taraudage de la partie mobile $3_{2b}$.

La tête de la vis comporte deux ergots transversaux $3_{2g}$ diamétralement opposés pour permettre de la faire tourner dans un sens ou dans l'autre au moyen d'une clé 4. Celle-ci se compose d'une partie tubulaire 4a comportant une fente 4b à son extrémité libre pour recevoir la tête de la vis $3_{2f}$ et chevaucher les tétons $3_{2g}$. La clé comporte, à son autre extrémité, un bouton cylindrique moleté 4c pour faciliter sa préhension. L'entraînement en rotation de la vis $3_{2f}$, dans un sens ou dans l'autre, a pour conséquence de rapprocher ou d'éloigner la partie $3_{2b}$ de la partie fixe $3_{2a}$.

Dans le logement sphérique $3_{2d}$ est articulée omnidirectionnellement une tige pivot $3_3$.

Ladite tige $3_3$ se compose d'une partie cylindrique $3_{3a}$ comportant à l'une de ses extrémités une proéminence sphérique $3_{3b}$. La partie cylindrique comporte, du côté de ladite proéminence sphérique $3_{3b}$ une partie conique $3_{3c}$ allant en diminuant de la partie $3_{3a}$

à la sphère $3_{3b}$. Celle-ci est d'un diamètre sensiblement égal à celui du logement $3_{2d}$ du socle $3_2$ et est engagée dans celui-ci pour former un ensemble à rotule. Pour obtenir l'articulation de la plaque de contact $3_1$ sur la tige $3_3$, on desserre le socle $3_2$ en dévissant la vis $3_{2f}$ pour libérer la proéminence sphérique $3_{3b}$ dans son logement $3_{2d}$. Le blocage de ladite plaque de contact dans une position donnée s'effectue en serrant la vis $3_{2f}$ pour enserrer la partie sphérique $3_{3b}$ de la tige $3_3$ dans son logement.

La tige $3_3$ est montée coulissante dans une embase $3_4$ destinée à être fixée à la plaque-base supérieure 1. Cette embase peut adopter toute forme. Dans un mode de réalisation, elle se présente sous la forme d'une douille cylindrique percée en son centre $3_{4a}$ selon un conduit cylindrique d'un diamètre légèrement supérieur à celui de la tige $3_{3a}$ pour permettre le coulissement de cette dernière et régler la position en hauteur de la plaque de contact $3_1$.

La douille $3_4$ comporte, du côté de son extrémité située du côté de la plaque $3_1$, une vis $3_{4b}$ s'étendant orthogonalement à la douille et vissée dans un trou taraudé réservé dans la paroi de la douille et débouchant dans le conduit $3_{4a}$. La tête de la vis $3_{4b}$ comporte, comme la vis $3_{2f}$ des ergots transversaux pour manoeuvrer la vis au moyen de l'outil 4.

La périphérie extérieure de l'extrémité de la douille, opposée à celle qui comporte ladite vis, comporte des aspérités $3_{4c}$, par exemple des dents de souris, un moletage ou autre, dans le but de réaliser, dans de bonnes conditions, l'ancrage de la monture 3 à la plaque-base supérieure 1. La tige $3_3$ portant la plaque de contact $3_1$ étant engagée dans la douille $3_4$, on bloque la position en hauteur de la plaque $3_1$ en serrant la vis $3_{4b}$ qui immobilise la tige $3_3$ dans le conduit $3_{4a}$. On réalise, tel que cela a été décrit plus haut, la plaque-base inférieure 2 et la plaque-base supérieure 1 dans laquelle on fixe la monture 3 en faisant pénétrer dans la couche de résine 1b la partie $3_{4c}$ de la douille $3_4$, la vis $3_{4b}$ s'étendant du côté de la partie du bourrelet 1a venant au contact de la lèvre du patient et on dispose ladite monture de telle sorte que la tige pivot $3_3$ s'étende dans une position sensiblement orthogonale à la paroi 1b qui recouvre la voûte du palais.

On place la plaque-base 2 sur la mâchoire du bas et la plaque-base 1 sur la mâchoire du haut en disposant la plaque de contact $3_1$

de telle sorte qu'elle se trouve au droit de la crête de la plaque-base inférieure 2. La vis de serrage $3_{2f}$ est desserrée pour permettre la libre articulation de la plaque de contact $3_1$ autour de ladite rotule.

On demande au patient de fermer la bouche, ce qui a pour effet de mettre en contact la plaque $3_1$ et la plaque-base inférieure 2. Le maxillaire inférieur 5 vient trouver sa bonne position quel que soit le chemin condylien parcouru et sans rencontrer de forces opposables.

On règle la hauteur d'occlusion en actionnant la vis de blocage $3_{4b}$ et on bloque en position la plaque de contact $3_1$ en actionnant la vis $3_{2f}$ (figure 2).

Après que les vis de blocage $3_{2f}$, $3_{4b}$ ont été serrées, on bloque l'ensemble au moyen d'une pâte thermodurcissable pour pouvoir ensuite sortir le tout de la bouche du patient en deux parties. Ces parties sont ensuite assemblées l'une à l'autre dans la position qu'elles avaient lors de la prise d'occlusion en utilisant les empreintes formées par les échancrures $3_{1b}$, en vue de la réalisation de la prothèse.

Pour accéder à la vis de blocage $3_{4b}$; on peut réserver dans certains cas dans le bourrelet la et dans le prolongement de ladite vis, une échancrure lc ou un trou.

Grâce au bourrelet de cire la, on détermine au cours de la prise d'occlusion les autres paramètres cliniques ainsi que leur matérialisation en vue de l'exécution de la future prothèse.

Bien entendu, sans sortir du cadre de l'invention, les parties qui viennent d'être décrites à titre d'exemples pourront être remplacées par des parties équivalentes remplissant la même fonction.

REVENDICATIONS

1. Dispositif pour la prise de l'occlusion chez l'édenté total haut et bas, comportant une plaque-base (1), placée sur la mâchoire supérieure et une plaque-base (2) placée sur la mâchoire inférieure, caractérisé en ce qu'il comporte, en outre, une monture (3) ancrée dans la plaque-base supérieure (1) et comportant une tige support ($3_3$), réglable en hauteur et comportant des moyens ($3_{4b}$) pour son blocage en position, à laquelle tige ($3_3$) est articulée omnidirectionnellement et à son extrémité libre, une plaque de contact ($3_1$) d'un contour analogue à la crête desdites plaques-bases (1, 2), laquelle plaque ($3_1$) est destinée à venir en appui sur la crête de la plaque-base inférieure (2), lorsque le patient ferme la bouche et comporte des moyens ($3_{2f}$) pour l'immobiliser en position.

2. Dispositif selon la revendication 1, caractérisé en ce que la plaque-base supérieure (1) comporte un bourrelet (1a) s'étendant devant la paroi interne buccale et sur lequel bourrelet (1a) la lèvre vient en appui.

3. Dispositif selon l'une quelconque des revendications 1 ou 2, caractérisé en ce que ladite monture (3) se compose d'une embase ($3_4$) à laquelle est fixée la tige support ($3_3$) de la plaque articulée ($3_1$), laquelle embase ($3_4$) comporte des moyens d'ancrage ($3_{4c}$) à la plaque-base supérieure (1) et des moyens de blocage ($3_{4b}$) de ladite tige ($3_3$).

4. Dispositif selon la revendication 3, caractérisé en ce que l'embase ($3_4$) de la monture adopte la forme d'une douille cylindrique dans laquelle est montée à coulissement ladite tige support ($3_3$), laquelle tige est immobilisée en position au moyen d'une vis de pression ($3_{4b}$) vissée dans la paroi de la douille ($3_4$).

5. Dispositif selon la revendication 4, caractérisé en ce que la douille ($3_4$) comporte, à la périphérie de sa partie destinée à pénétrer dans l'épaisseur (1b) de la plaque-base supérieure (1) des aspérités ($3_{4c}$) pour favoriser son ancrage dans cette dernière.

6. Dispositif selon l'une quelconque des revendications 1 à 5, caractérisé en ce que la vis de pression ($3_{4b}$) qui équipe la douille ($3_4$) s'étend du côté du bourrelet (1a) de la plaque-base supérieure (1), laquelle comporte, dans le prolongement de l'axe longitudinal de la vis ($3_{4b}$) une échancrure (1c) pour permettre l'accès à la vis ($3_{4b}$) au moyen d'une clé (4) adaptée pour la manoeuvrer.

Fig 1

0162991

Fig. 2

Fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | CH-A- 281 272 (LANDE) <br> * Page 1, ligne 34 - page 2, ligne 38; figure * | 1,3,4 | A 61 C 9/00 |
| A | FR-A- 979 073 (LANDE) <br> * Page 2, colonne de gauche, ligne 46 - colonne de droite, ligne 30; figures 1-4 * | 1,3 | |
| A | US-A-1 338 415 (BARROW) <br> * Page 1, lignes 38-59, 91-106; figures 1, 3 * | 1 | |
| A | US-A-2 562 106 (LEATHERS) | | |

DOMAINES TECHNIQUES
RECHERCHES (Int. Cl.4)

A 61 C 9/00
A 61 C 11/00
A 61 C 19/00

Le présent rapport de recherche a été établi pour toutes les revendications

| Lieu de la recherche <br> BERLIN | Date d'achèvement de la recherche <br> 19-12-1984 | Examinateur <br> SIMON J J P |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82